(19) Europäisches Patentamt
European Patent Office
Office européen des brevets

(11) **EP 4 418 342 A1**

(12) **EUROPEAN PATENT APPLICATION**

(43) Date of publication:
**21.08.2024 Bulletin 2024/34**

(21) Application number: **24153506.1**

(22) Date of filing: **23.01.2024**

(51) International Patent Classification (IPC):
*H01M 4/131* (2010.01)   *H01M 4/505* (2010.01)
*H01M 4/525* (2010.01)   *H01M 10/0525* (2010.01)
*H01M 4/02* (2006.01)

(52) Cooperative Patent Classification (CPC):
**H01M 4/131; H01M 4/505; H01M 4/525;**
**H01M 10/0525;** H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.02.2023 JP 2023020478**

(71) Applicant: **TOYOTA JIDOSHA KABUSHIKI**
**KAISHA**
**Toyota-shi, Aichi-ken, 471-8571 (JP)**

(72) Inventors:
• **TOMITA, Masataka**
  **Toyota-shi, 471-8571 (JP)**
• **SHIMIZU, Yuusuke**
  **Toyota-shi, 471-8571 (JP)**

(74) Representative: **D Young & Co LLP**
**3 Noble Street**
**London EC2V 7BQ (GB)**

(54) **NON-AQUEOUS ELECTROLYTE SECONDARY BATTERY**

(57) A non-aqueous electrolyte secondary battery comprising a positive electrode, a negative electrode, and a separator, wherein the positive electrode includes a positive electrode active material layer, the positive electrode active material layer includes a positive electrode active material having a layered structure, the positive electrode active material is in the form of secondary particles, the secondary particles have an average particle size of 8.0 $\mu$m or more, and a ratio of a DBP oil absorption number of the secondary particles to a BET specific surface area of the secondary particles is 0.3 or more.

FIG.1

**Description**

CROSS REFERENCE TO RELATED APPLICATIONS

This nonprovisional application is based on Japanese Patent Application No. 2023-020478 filed on February 14, 2023, with the Japan Patent Office, the entire contents of which are hereby incorporated by reference.

BACKGROUND OF THE DISCLOSURE

Field

The present disclosure relates to a non-aqueous electrolyte secondary battery.

Description of the Background Art

Japanese Patent Laying-Open No. 2014-10991 discloses a non-aqueous electrolyte secondary battery which comprises a positive electrode active material having a DBP oil absorption number within a certain range, and which can have reduced battery resistance as well as enhanced capacity retention during storage.

SUMMARY OF THE DISCLOSURE

There is a demand for further enhancement of the capacity of non-aqueous electrolyte secondary batteries. For increasing capacity, the electrode is made thicker, for example. However, when the electrode is made thicker, input-output properties and cycling performance may be impaired. For enhancing these properties, it is necessary to let the reactions occur uniformly in the thickness direction inside the electrode.
As an index of the uniformity of the reactions in the thickness direction inside the electrode, ionic resistance may be used. Ionic resistance refers to diffusability of ions inside the electrode. The lower the ionic resistance value is, the easier the ions can diffuse inside the electrode, which may let the reactions occur uniformly.
An object of the present disclosure is to inhibit an increase of ionic resistance.

[1] A non-aqueous electrolyte secondary battery comprising a positive electrode, a negative electrode, and a separator, wherein

the positive electrode includes a positive electrode active material layer,
the positive electrode active material layer includes a positive electrode active material having a layered structure,
the positive electrode active material includes secondary particles,
the secondary particles have an average particle size of 8.0 $\mu$m or more, and
a ratio of a DBP oil absorption number of the secondary particles to a BET specific surface area of the secondary particles is 0.3 or more.
As compared to primary particles, secondary particles tend to be large and thereby form simple pathways for ions, favorable for diffusion of ions inside the electrode. Moreover, a higher ratio of the DBP oil absorption number of secondary particles to the BET specific surface area of the secondary particles means that the oil absorption number per area of the secondary particles is high, namely, the positive electrode active material is highly capable of retaining the electrolyte solution. It is conceivable that when the electrolyte solution is retained well, more ions tend to be present in the proximity of the positive electrode active material, and thereby reactions in the thickness direction inside the electrode tend to occur.

[2] The non-aqueous electrolyte secondary battery according to [1], wherein the positive electrode active material layer has a thickness of 80 $\mu$m or more.
[3] The non-aqueous electrolyte secondary battery according to [1] or [2], wherein

the positive electrode active material includes primary particles, and
a content rate of the secondary particles in the positive electrode active material is 50 mass% or more.

[4] The non-aqueous electrolyte secondary battery according to any one of [1] to [3], wherein

the ratio of a DBP oil absorption number of the secondary particles to a BET specific surface area of the secondary particles is 0.5 or more.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating an example of a non-aqueous electrolyte secondary battery according to the present embodiment.
Fig. 2 is a table showing a first battery configuration.
Fig. 3 is a table showing a second battery configuration.
Fig. 4 is a table showing a third battery configuration.
Fig. 5 illustrates an equivalent circuit model of non-aqueous electrolyte secondary batteries according to Examples and Comparative Examples of the present embodiment.
Fig. 6 is a table showing configurations of samples in Examples, as well as evaluation results.
Fig. 7 is a table showing configurations of samples in Comparative Examples and Reference Examples, as well as evaluation results.
Fig. 8 is a graph showing the relationship between the ratio of the DBP oil absorption number of the positive electrode active material to the BET specific surface area of the positive electrode active material and the ionic resistance of the non-aqueous electrolyte secondary battery according to Examples 1 to 10 and Comparative Examples 1 to 10 of the present embodiment.

DESCRIPTION OF THE PREFERRED EMBODIMENTS

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

A stoichiometric composition formula represents a typical example of a compound. A compound may have a non-stoichiometric composition. For example, "$Al_2O_3$" is not limited to a compound where the ratio of the amount of substance (molar ratio) is "Al/O=2/3". "$Al_2O_3$" represents a compound that includes Al and O in any composition ratio, unless otherwise specified. Further, the compound may be doped with a trace element, or some of Al and/or O may be replaced by another element, for example.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include, for example, at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like. These substituents may be further substituted. When there are two or more substituents, these substituents may be the same as one another or may be different from each other. A plurality of substituents may be bonded together to form a ring.

"Copolymer" includes at least one selected from the group consisting of unspecified-type, statistical-type, random-type, alternating-type, periodic-type, block-type, and graft-type.

<<Non-Aqueous Electrolyte Secondary Battery>>

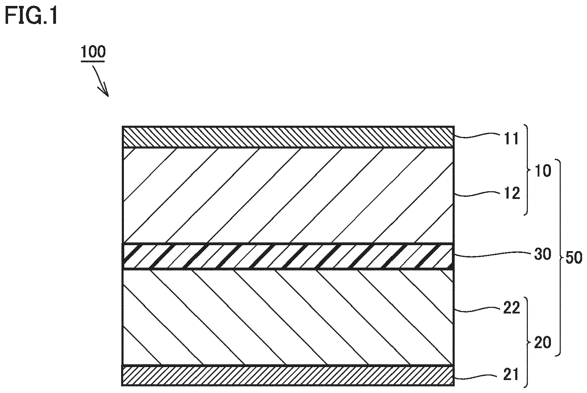

Fig. 1 is a conceptual view illustrating an example of a non-aqueous electrolyte secondary battery according to the present embodiment. A battery 100 includes a power generation element 50 and an electrolyte (not illustrated).

<Exterior Package>

Battery 100 may include an exterior package (not illustrated). The exterior package may accommodate power generation element 50 and the electrolyte. The exterior package may have any configuration. The exterior package may be a case made of metal, or may be a pouch made of a metal foil laminated film, for example. The case may be in any shape. The case may be cylindrical, prismatic, flat, coin-shaped, and/or the like, for example. The exterior package may include Al and/or the like, for example. The exterior package may accommodate a single power generation element 50, or may accommodate a plurality of power generation elements 50, for example. The plurality of power generation elements 50 may form a series circuit, or may form a parallel circuit, for example. Inside the exterior package, the plurality of power generation elements 50 may be stacked in the thickness direction of battery 100.

<Power Generation Element>

Power generation element 50 may also be called "an electrode group", "an electrode assembly", and the like. Power generation element 50 includes a positive electrode 10 and a negative electrode 20. Power generation element 50 may further include a separator 30. Separator 30 is interposed between positive electrode 10 and negative electrode 20. Power generation element 50 may have any configuration. For example, power generation element 50 may be a stack-type one. For example, positive electrode 10 and negative electrode 20 may be alternately stacked with separator 30 interposed between positive electrode 10 and negative electrode 20 to form power generation element 50. For example, power generation element 50 may be a wound-type one. For example, positive electrode 10 having a belt-like shape, separator 30 having a belt-like shape, and negative electrode 20 having a belt-like shape may be stacked to form a stack. The resulting stack may be wound spirally to form power generation element 50. After being wound, the wound power generation element 50 may be shaped into a flat form.

<Positive Electrode>

Positive electrode 10 may be in sheet form, for example. Positive electrode 10 includes a positive electrode current collector 11 and a positive electrode active material layer 12. Positive electrode current collector 11 is electrically conductive. Positive electrode current collector 11 supports positive electrode active material layer 12. Positive electrode current collector 11 may be in sheet form, for example. Positive electrode current collector 11 may have a thickness from 5 to 50 $\mu$m, for example. Positive electrode current collector 11 may include a metal foil, for example. Positive electrode current collector 11 may include at least one selected from the group consisting of Al, Mn, Ti, Fe, and Cr, for example. Positive electrode current collector 11 may include an Al foil, an Al alloy foil, a Ti foil, a stainless steel (SUS) foil, and/or the like, for example.

Between positive electrode current collector 11 and positive electrode active material layer 12, an intermediate layer (not illustrated) may be formed. The intermediate layer does not include a positive electrode active material. The intermediate layer may have a thickness from 0.1 to 5 $\mu$m, for example. The intermediate layer may include a conductive material, an insulation material, a binder, and/or the like, for example. The conductive material and the binder are described below. The insulation material may include alumina, boehmite, aluminum hydroxide, and/or the like, for example.

Positive electrode active material layer 12 is placed on the surface of positive electrode current collector 11. Positive electrode active material layer 12 may be placed on only one side of positive electrode current collector 11. Positive electrode active material layer 12 may be placed on both sides of positive electrode current collector 11. Positive electrode active material layer 12 may have a thickness of 10 $\mu$m or more, or may have a thickness of 50 $\mu$m or more, or may have a thickness of 80 $\mu$m or more, or may have a thickness of 100 $\mu$m or more, for example. It is conceivable that when positive electrode active material layer 12 is thick, more specifically when the thickness thereof is 80 $\mu$m or more, post-endurance retention is enhanced even more. Positive electrode active material layer 12 may have a thickness of 1000 $\mu$m or less, or may have a thickness of 500 $\mu$m or less, or may have a thickness of 300 $\mu$m or less. Positive electrode active material layer 12 includes a positive electrode active material. Positive electrode active material layer 12 may further include a conductive material, a binder, and the like, for example.

<<Conductive Material>>

The conductive material may form an electron conduction path inside positive electrode active material layer 12. The amount of the conductive material to be used may be, for example, from 0.1 to 10 parts by mass relative to 100 parts by mass of the positive electrode active material. The conductive material may include any component. The conductive material may include, for example, at least one selected from the group consisting of graphite, acetylene black (AB), Ketjenblack (registered trademark), vapor grown carbon fibers (VGCFs), carbon nanotubes (CNTs), and graphene flakes (GFs).

<<Binder>>

The binder is capable of fixing positive electrode active material layer 12 to positive electrode current collector 11. The amount of the binder to be used may be, for example, from 0.1 to 10 parts by mass relative to 100 parts by mass of the positive electrode active material. The binder may include any component. The binder may include, for example, at least one selected from the group consisting of polyvinylidene difluoride (PVdF), vinylidene difluoride-hexafluoropropylene copolymer (PVdF-HFP), tetrafluoroethylene (PTFE), CMC, PAA, polyvinyl alcohol (PVA), polyvinylpyrrolidone (PVP), polyoxyethylene alkyl ether, and derivatives of these.

<<Other Components>>

Positive electrode active material layer 12 may further include an inorganic filler, an organic filler, a solid electrolyte, a surface modifier, a lubricant, a flame retardant, a protective agent, a flux, a coupling agent, an adsorbent, and/or the like, for example. Positive electrode active material layer 12 may include polyoxyethylene allylphenyl ether phosphate, zeolite, silane coupling agent, $MoS_2$, $WO_3$, and/or the like, for example.

<<Positive Electrode Active Material>>

The positive electrode active material has a layered structure. The positive electrode active material may include a lithium composite oxide, for example. Examples of a lithium composite oxide having a layered structure include lithium-nickel-based composite oxide, lithium-manganese-based composite oxide, lithium-cobalt-based composite oxide, lithium-nickel-cobalt-aluminum-based composite oxide, lithium-iron-nickel-manganese-based composite oxide, lithium-nickel-cobalt-manganese-based composite oxide, and the like. Among them, lithium-nickel-cobalt-manganese-based composite oxide is preferable for its particularly excellent resistance properties.

The positive electrode active material includes secondary particles (a group of primary particles). The secondary particles have an average particle size (D50) of 8.0 μm or more. When the D50 of the secondary particles is below 8.0 μm, ions tend not to diffuse inside the electrode, potentially leading to an increase of ionic resistance. Preferably, the D50 of the secondary particles is 10 μm or more. From the viewpoint of the filling factor of the positive electrode active material layer, the D50 of the secondary particles may be 20 μm or less, or may be 18 μm or less, or may be 16 μm or less, for example. Herein, D50 refers to a particle size in volume-based particle size distribution at which the cumulative frequency accumulated from the small particle size side reaches 50%. D50 may be measured by laser diffraction.

The secondary particles have a BET specific surface area from 0.1 to 1.0 $m^2/g$. When the BET specific surface area of the secondary particles is below 0.1 $m^2/g$, the reaction resistance of the battery can increase, potentially leading to degradation of battery properties. When the BET specific surface area of the secondary particles is above 1.0 $m^2/g$, the amount of gas generation during endurance or storage of the battery can increase. Preferably, the BET specific surface area of the secondary particles is from 0.2 to 0.7 $m^2/g$. Herein, the BET specific surface area refers to a specific surface area, calculated by a BET multi-point method, in an absorption isotherm obtained through measurement by a gas adsorption method. The adsorbate gas is nitrogen gas. For each measurement target, the BET specific surface area is measured three times or more. The arithmetic mean of the three or more measurements is regarded as the BET specific surface area of the measurement target.

The secondary particles have a DBP oil absorption number from 0.1 to 0.5 ml/g. When the DBP oil absorption number of the secondary particles is below 0.1 ml/g, at the time of preparing a coating material such as a slurry that includes the positive electrode active material, mixing with solvent and/or dispersion medium tends not to be easy, potentially making it difficult to prepare the coating material. When the DBP oil absorption number of the secondary particles is above 0.5 ml/g, the solid content of the coating material can decrease, potentially making it difficult to form a thick coating. Preferably, the DBP oil absorption number of the secondary particles is from 0.1 to 0.4 ml/g. Herein, the DBP oil absorption number refers to the oil absorption number (ml/100g) according to "JIS K6217-4 Carbon black for rubber industry- Fundamental characteristics- Part 4: Determination of oil absorption number and oil absorption number of compressed sample", converted into the oil absorption number per 1 g (ml/g). The oil to be absorbed by the secondary particles is dibutyl phthalate (DBP).

The ratio of the DBP oil absorption number of the secondary particles to the BET specific surface area of the secondary particles (hereinafter, this ratio may be also referred to as "A/B") is 0.3 or more. When A/B is below 0.3, the secondary particles are poorly capable of retaining the electrolyte solution, less ions tend to be present in the proximity of the secondary particles and thereby reactions in the thickness direction inside the electrode tend not to occur, potentially resulting in an increase of ionic resistance. Preferably, A/B is 0.5 or more.

The positive electrode active material may include primary particles. The D50, the BET specific surface area, and the DBP oil absorption number of the primary particles, as well as the ratio of the DBP oil absorption number of the primary particles relative to the BET specific surface area of the primary particles (hereinafter, this ratio may be also referred to as " A'/B'") are not particularly limited. The D50 of the primary particles may be from 0.1 to 10 μm, or may be from 1.0 to 8.0 μm, for example. The BET specific surface area of the primary particles may be from 0.1 to 2.0 m$^2$/g, or may be from 0.5 to 1.5 m$^2$/g, for example. The DBP oil absorption number of the primary particles may be from 0.1 to 1.0 ml/g, or may be from 0.2 to 0.5 ml/g, for example. A'/B' may be from 0.1 to 1.0, or may be from 0.2 to 0.5, for example.

Preferably, the content rate of the secondary particles in the positive electrode active material, namely, the content rate of the secondary particles relative to a total of the primary particles and the secondary particles in the positive electrode active material is 50 mass% or more. When the content rate of the secondary particles in the positive electrode active material is below 50 mass%, capacity retention may be degraded. More preferably, the content rate of the secondary particles in the positive electrode active material is 90 mass% or more.

The positive electrode active material may include a transition metal oxide, a polyanion compound, and/or the like, for example. In a single particle (positive electrode active material), the composition may be uniform, or may be non-uniform. For example, there may be a gradient in the composition from the surface of the particle toward the center. The composition may change contiguously, or may change non-contiguously (in steps).

<Transition Metal Oxide: Space Group R-3m>

The transition metal oxide may have any crystal structure. For example, the transition metal oxide may include a crystal structure that belongs to a space group R-3m and/or the like. For example, a compound represented by the general formula "LiMO$_2$" may have a crystal structure that belongs to a space group R-3m. The transition metal oxide may be represented by the following formula (A-1), for example.

$$Li_{1-a}Ni_xM_{1-x}O_2 \qquad (A-1)$$

In the above formula, the relationships of -0.5≤a≤0.5, 0≤x≤1 are satisfied.
M may include, for example, at least one selected from the group consisting of Co, Mn, and Al.
In the above formula (A-1), x may satisfy the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x≤1, for example. a may satisfy the relationship of -0.4≤a≤0.4, -0.3≤a≤0.3, -0.2≤a≤0.2, or -0.1≤a≤0.1, for example.
The transition metal oxide may include, for example, at least one selected from the group consisting of LiCoO$_2$, LiMnO$_2$, LiNi$_{0.9}$Co$_{0.1}$O$_2$, LiNi$_{0.9}$Mn$_{0.1}$O$_2$, and LiNiO$_2$.

<NCM>

The transition metal oxide may be represented by the following formula (A-2), for example. A compound represented by the following formula (A-2) may also be called "NCM".

$$Li_{1-a}Ni_xCo_yMn_zO_2 \qquad (A-2)$$

In the above formula, the relationships of -0.5≤a≤0.5, 0<x<1, 0<y<1, 0<z<1, x+y+z=1 are satisfied.
In the above formula (A-2), x may satisfy the relationship of 0<x≤0.1, 0.1≤x≤0.2, 0.2≤x≤0.3, 0.3≤x≤0.4, 0.4≤x≤0.5, 0.5≤x≤0.6, 0.6≤x≤0.7, 0.7≤x≤0.8, 0.8≤x≤0.9, or 0.9≤x<1, for example.
In the above formula (A-2), y may satisfy the relationship of 0<y≤0.1, 0.1≤y≤0.2, 0.2≤y≤0.3, 0.3≤y≤0.4, 0.4≤y≤0.5, 0.5≤y≤0.6, 0.6≤y≤0.7, 0.7≤y≤0.8, 0.8≤y≤0.9, or 0.9≤y<1, for example.
In the above formula (A-2), z may satisfy the relationship of 0<z≤0.1, 0.1≤z≤0.2, 0.2≤z≤0.3, 0.3≤z≤0.4, 0.4≤z≤0.5, 0.5≤z≤0.6, 0.6≤z≤0.7, 0.7≤z≤0.8, 0.8≤z≤0.9, or 0.9≤z<1, for example.
NCM may include, for example, at least one selected from the group consisting of LiNi$_{1/3}$Co$_{1/3}$Mn$_{1/3}$O$_2$, LiNi$_{0.4}$Co$_{0.3}$Mn$_{0.3}$O$_2$, LiNi$_{0.3}$Co$_{0.4}$Mn$_{0.3}$O$_2$, LiNi$_{0.3}$Co$_{0.3}$Mn$_{0.4}$O$_2$, LiNi$_{0.5}$Co$_{0.2}$Mn$_{0.3}$O$_2$, LiNi$_{0.5}$Co$_{0.3}$Mn$_{0.2}$O$_2$, LiNi$_{0.5}$Co$_{0.4}$Mn$_{0.1}$O$_2$, LiNi$_{0.5}$Co$_{0.1}$Mn$_{0.4}$O$_2$, LiNi$_{0.6}$Co$_{0.2}$Mn$_{0.2}$O$_2$, LiNi$_{0.6}$Co$_{0.3}$Mn$_{0.1}$O$_2$, LiNi$_{0.6}$Co$_{0.1}$Mn$_{0.3}$O$_2$, LiNi$_{0.7}$Co$_{0.1}$Mn$_{0.2}$O$_2$, LiNi$_{0.7}$Co$_{0.2}$Mn$_{0.1}$O$_2$, LiNi$_{0.8}$Co$_{0.1}$Mn$_{0.1}$O$_2$, and LiNi$_{0.9}$Co$_{0.05}$Mn$_{0.05}$O$_2$.

<NCA>

The transition metal oxide may be represented by the following formula (A-3), for example. A compound represented by the following formula (A-3) may also be called "NCA".

$$Li_{1-a}Ni_xCo_yAl_zO_2 \qquad (A-3)$$

In the above formula, the relationships of -0.5≤a≤0.5, 0<x<1, 0<y<1, 0<z<1, x+y+z=1 are satisfied.

In the above formula (A-3), x may satisfy the relationship of $0<x\leq0.1$, $0.1\leq x\leq0.2$, $0.2\leq x\leq0.3$, $0.3\leq x\leq0.4$, $0.4\leq x\leq0.5$, $0.5\leq x\leq0.6$, $0.6\leq x\leq0.7$, $0.7\leq x\leq0.8$, $0.8\leq x\leq0.9$, or $0.9\leq x<1$, for example.

In the above formula (A-3), y may satisfy the relationship of $0<y\leq0.1$, $0.1\leq y\leq0.2$, $0.2\leq y\leq0.3$, $0.3\leq y\leq0.4$, $0.4\leq y\leq0.5$, $0.5\leq y\leq0.6$, $0.6\leq y\leq0.7$, $0.7\leq y\leq0.8$, $0.8\leq y\leq0.9$, or $0.9\leq y<1$, for example.

In the above formula (A-3), z may satisfy the relationship of $0<z\leq0.1$, $0.1\leq z\leq0.2$, $0.2\leq z\leq0.3$, $0.3\leq z\leq0.4$, $0.4\leq z\leq0.5$, $0.5\leq z\leq0.6$, $0.6\leq z\leq0.7$, $0.7\leq z\leq0.8$, $0.8\leq z\leq0.9$, or $0.9\leq z<1$, for example.

NCA may include, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$.

<Multi-Component System>

The positive electrode active material may include two or more NCMs and/or the like, for example. The positive electrode active material may include NCM ($0.6\leq x$) and NCM ($x<0.6$), for example. "NCM ($0.6\leq x$)" refers to a compound in which x (Ni ratio) in the above formula (A-2) is 0.6 or more. NCM ($0.6\leq x$) may also be called "a high-nickel material", for example. NCM ($0.6\leq x$) includes $LiNi_{0.8}Co_{0.1}Mn_{0.1}O_2$ and/or the like, for example. "NCM($x<0.6$)" refers to a compound in which x (Ni ratio) in the above formula (A-2) is less than 0.6. NCM ($x<0.6$) includes $LiNi_{1/3}Co_{1/3}Mn_{1/3}O_2$ and/or the like, for example. The mixing ratio (mass ratio) between NCM ($0.6\leq x$) and NCM ($x<0.6$) may be "NCM ($0.6\leq x$)/NCM ($x<0.6$)=9/1 to 1/9", or "NCM ($0.6\leq x$)/NCM ($x<0.6$)=9/1 to 4/6", or "NCM ($0.6\leq x$)/NCM ($x<0.6$)=9/1 to 3/7", for example.

The positive electrode active material may include NCA and NCM, for example. The mixing ratio (mass ratio) between NCA and NCM may be "NCA/NCM=9/1 to 1/9", "NCA/NCM=9/1 to 4/6", or "NCA/NCM=9/1 to 3/7", for example. Between NCA and NCM, the Ni ratio may be the same or may be different. The Ni ratio of NCA may be more than the Ni ratio of NCM. The Ni ratio of NCA may be less than the Ni ratio of NCM.

<Transition Metal Oxide: Space Group C2/m>

The transition metal oxide may include a crystal structure that belongs to a space group C2/m and/or the like, for example. The transition metal oxide may be represented by the following formula (A-4), for example.

$$Li_2MO_3 \qquad (A-4)$$

In the above formula, M may include, for example, at least one selected from the group consisting of Ni, Co, Mn, and Fe.

The positive electrode active material may include a mixture of $LiMO_2$ (space group R-3m) and $Li_2MO_3$ (space group C2/m), for example. The positive electrode active material may include a solid solution that is formed of $LiMO_2$ and $Li_2MO_3$ ($Li_2MO_3$-$LiMO_2$), and/or the like, for example.

<Transition Metal Oxide: Space Group Fd-3m>

The transition metal oxide may include a crystal structure that belongs to a space group Fd-3m, and/or the like, for example. The transition metal oxide may be represented by, for example, the following formula (A-5).

$$LiMn_{2-x}M_xO_4 \qquad (A-5)$$

In the above formula, the relationship of $0\leq x\leq2$ is satisfied.

M may include, for example, at least one selected from the group consisting of Ni, Fe, and Zn.

$LiM_2O_4$ (space group Fd-3m) may include, for example, at least one selected from the group consisting of $LiMn_2O_4$ and $LiMn_{1.5}Ni_{0.5}O_4$. The positive electrode active material may include a mixture of $LiMO_2$ (space group R-3m) and $LiM_2O_4$ (space group Fd-3m), for example. The mixing ratio (mass ratio) between $LiMO_2$ (space group R-3m) and $LiM_2O_4$ (space group Fd-3m) may be "$LiMO_2/LiM_2O_4$=9/1 to 9/1", or "$LiMO_2/LiM_2O_4$=9/1 to 5/5", or "$LiMO_2/LiM_2O_4$=9/1 to 7/3", for example.

<Polyanion Compound>

The polyanion compound may include a phosphoric acid salt (such as $LiFePO_4$ for example), a silicic acid salt, a boric acid salt, and/or the like, for example. The polyanion compound may be represented by the following formulae (A-6) to (A-9), for example.

$$LiMPO_4 \qquad (A-6)$$

$$Li_{2-x}MPO_4F \qquad (A-7)$$

$$Li_2MSiO_4 \qquad (A-8)$$

$$LiMBO_3 \qquad (A-9)$$

In the above formulae (A-6) to (A-9), M may include, for example, at least one selected from the group consisting of Fe, Mn, and Co. In the above formula (A-7), the relationship of $0 \le x \le 2$ may be satisfied, for example.

The positive electrode active material may include a mixture of $LiMO_2$ (space group R-3m) and the polyanion compound, for example. The mixing ratio (mass ratio) between $LiMO_2$ (space group R-3m) and the polyanion compound may be "$LiMO_2$/(polyanion compound) =9/1 to 9/1", or "$LiMO_2$/(polyanion compound) =9/1 to 5/5", or "$LiMO_2$/(polyanion compound) =9/1 to 7/3", for example.

<Dopant>

To the positive electrode active material, a dopant may be added. The dopant may be diffused throughout the entire particle, or may be locally distributed. For example, the dopant may be locally distributed on the particle surface. The dopant may be a substituted solid solution atom, or may be an intruding solid solution atom. The amount of the dopant to be added (the molar fraction relative to the total amount of the positive electrode active material) may be from 0.01 to 5%, or may be from 0.1 to 3%, or may be from 0.1 to 1%, for example. A single type of dopant may be added, or two or more types of dopant may be added. The two or more dopants may form a complex.

The dopant may include, for example, at least one selected from the group consisting of B, C, N, a halogen, Si, Na, Mg, Al, Mn, Co, Cr, Sc, Ti, V, Cu, Zn, Ga, Ge, Se, Sr, Y, Zr, Nb, Mo, In, Pb, Bi, Sb, Sn, W, La, Ce, Pr, Nd, Pm, Sm, Eu, Gd, Tb, Dy, Ho, Er, Tm, Yb, Lu, and an actinoid.

For example, to NCA, a combination of "Zr, Mg, W, Sm", a combination of "Ti, Mn, Nb, Si, Mo", or a combination of "Er, Mg" may be added.

For example, to NCM, Ti may be added. For example, to NCM, a combination of "Zr, W", a combination of "Si, W", or a combination of "Zr, W, Al, Ti, Co" may be added.

<Hollow Particles, Solid Particles>

"Hollow particle" refers to a secondary particle in which, in a cross-sectional image thereof, the proportion of the area of the central cavity is 30% or more of the entire cross-sectional area of the particle. The proportion of the cavity in a hollow particle may be 40% or more, or 50% or more, or 60% or more, for example. "Solid particle" refers to a secondary particle in which, in a cross-sectional image of the particle, the proportion of the area of the central cavity is less than 30% of the entire cross-sectional area of the particle. The proportion of the cavity in a solid particle may be 20% or less, or 10% or less, or 5% or less, for example. The positive electrode active material may be hollow particles, or may be solid particles. A mixture of hollow particles and solid particles may be used. The mixing ratio (mass ratio) between hollow particles and solid particles may be "(hollow particles)/(solid particles)=1/9 to 9/1", or "(hollow particles)/(solid particles)=2/8 to 8/2", or "(hollow particles)/(solid particles)=3/7 to 7/3", or "(hollow particles)/(solid particles)=4/6 to 6/4", for example.

<Negative Electrode>

Negative electrode 20 may be in sheet form, for example. Negative electrode 20 may include a negative electrode current collector 21 and a negative electrode active material layer 22, for example. Negative electrode current collector 21 is electrically conductive. Negative electrode current collector 21 supports negative electrode active material layer 22. Negative electrode current collector 21 may be in sheet form, for example. Negative electrode current collector 21 may have a thickness from 5 to 50 $\mu$m, for example. Negative electrode current collector 21 may include a metal foil and/or the like, for example. Negative electrode current collector 21 may include at least one selected from the group consisting of Cu, Ni, Fe, Zn, Pb, Ag, and Au, for example. Negative electrode current collector 21 may include a Cu foil, a Cu alloy foil, and/or the like, for example.

Negative electrode active material layer 22 is placed on the surface of negative electrode current collector 21. Negative electrode active material layer 22 may be placed on only one side of negative electrode current collector 21. Negative electrode active material layer 22 may be placed on both sides of negative electrode current collector 21. Negative electrode active material layer 22 may have a thickness from 10 to 1000 $\mu$m, or from 50 to 500 $\mu$m, or from 100 to 300 $\mu$m, for example. Negative electrode active material layer 22 includes a negative electrode active material.

The negative electrode active material layer may further include a conductive material, a binder, and the like, for example.

Negative electrode active material layer 22 may have a thickness from 10 to 1000 μm, or from 50 to 500 μm, or from 100 to 300 μm, for example. Negative electrode active material layer 22 includes a negative electrode active material. The negative electrode active material layer may further include a conductive material, a binder, and the like, for example.

<Conductive Material>

The conductive material may form an electron conduction path inside negative electrode active material layer 22. The content of the conductive material may be, for example, from 0.1 to 10 parts by mass relative to 100 parts by mass of the negative electrode active material. The conductive material may include any component. The conductive material may include at least one selected from the group consisting of graphite, AB, Ketjenblack, VGCFs, CNTs, and GFs, for example. The CNTs may include at least one selected from the group consisting of single-walled CNTs (SWCNTs) and multi-walled CNTs (MWCNTs).

<<Binder>>

The binder is capable of fixing negative electrode active material layer 22 to negative electrode current collector 21. The content of the binder may be, for example, from 0.1 to 10 parts by mass relative to 100 parts by mass of the negative electrode active material. The binder may include any component. The binder may include, for example, at least one selected from the group consisting of styrenebutadiene rubber (SBR), acrylate butadiene rubber (ABR), sodium alginate, carboxymethylcellulose (such as CMC-H, CMC-Na, CMC-Li, CMC-NH$_4$), polyacrylic acid (such as PAA-H, PAA-Na, PAA-Li), polyacrylonitrile (PAN), polyvinylidene difluoride (PVdF), polytetrafluoroethylene (PTFE), acrylic resin (acrylic acid ester copolymer), methacrylic resin (methacrylic acid ester copolymer), polyvinylpyrrolidone (PVP), polyvinyl alcohol (PVA), and derivatives of these. For example, the expression "CMC-Na" refers to a Na salt of CMC. For example, the expression "CMC-H" refers to an acid-type CMC. The same applies to "PAA-Na" and the like.

<<Other Components>>

Negative electrode active material layer 22 may further include an inorganic filler, an organic filler, a solid electrolyte, a surface modifier, a dispersant, a lubricant, a flame retardant, a protective agent, a flux, a coupling agent, an adsorbent, and/or the like, for example. The negative electrode active material layer may include a layered silicate (such as smectite, montmorillonite, bentonite, hectorite), an inorganic filler (such as solid alumina, hollow silica, boehmite), a polysiloxane compound, and/or the like, for example.

<Negative Electrode Active Material>

The negative electrode active material may include, for example, at least one selected from the group consisting of natural graphite, artificial graphite, soft carbon, hard carbon, silicon (Si), SiO, Li silicate, Si-based alloy, tin (Sn), SnO, Sn-based alloy, and Li$_4$Ti$_5$O$_{12}$.

<Carbon-Based Active Material>

The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The graphite may include a dopant. The dopant may include, for example, at least one selected from the group consisting of B, N, P, Li, and Ca. The amount to be added may be from 0.01 to 5%, or from 0.1 to 3%, or from 0.1 to 1% in molar fraction, for example.

The surface of the graphite may be covered with amorphous carbon, for example. The surface of the graphite may be covered with another type of material, for example. This another type of material may include, for example, at least one selected from the group consisting of P, W, Al, and O. The another type of material may include, for example, at least one selected from the group consisting of Al(OH)$_3$, AlOOH, Al$_2$O$_3$, WO$_3$, Li$_2$CO$_3$, LiHCO$_3$, and Li$_3$PO$_4$.

<Alloy-Based Active Material>

SiO may be represented by the following formula (B-1), for example.

$$SiO_x \qquad (B-1)$$

In the above formula, the relationship of $0<x<2$ is satisfied.

In the above formula (B-1), x may satisfy $0.5 \leq x \leq 1.5$ or $0.8 \leq x \leq 1.2$, for example.

Li silicate may include, for example, at least one selected from the group consisting of $Li_4SiO_4$, $Li_2SiO_3$, $Li_2Si_2O_5$, and $Li_8SiO_6$. The second negative electrode active material may include a mixture of Si and Li silicate, for example. The mixing ratio (mass ratio) may be "Si/(Li silicate)=1/9 to 9/1", or "Si/(Li silicate)=2/8 to 8/2", or "Si/(Li silicate)=3/7 to 7/3", or "Si/(Li silicate)=4/6 to 6/4", for example.

The alloy-based active material (such as Si, SiO) may include an additive. The additive may be a substituted solid solution atom or an intruding solid solution atom, for example. The additive may be an adherent adhered to the surface of the alloy-based active material. The adherent may be an elementary substance, an oxide, a carbide, a nitride, a halide, and/or the like, for example. The amount to be added may be from 0.01 to 5%, or from 0.1 to 3%, or from 0.1 to 1% in molar fraction, for example. The additive may include, for example, at least one selected from the group consisting of Li, Na, K, Rb, Be, Mg, Ca, Sr, Fe, Ba, B, Al, Ga, In, C, Ge, Sn, Pb, N, P, As, Y, Sb, and S. That is, SiO may be doped with Mg and/or Na. For example, Mg silicate and/or Na silicate may be formed. For example, boron oxide (such as $B_2O_3$, for example), yttrium oxide (such as $Y_2O_3$, for example), and/or the like may be added to SiO.

<Si-C Composite Material>

The negative electrode active material may include a composite material of the carbon-based active material (such as graphite) and the alloy-based active material (such as Si), for example. A composite material including Si and carbon may also be called "an Si-C composite material". For example, Si microparticles may be dispersed inside carbon particles. For example, Si microparticles may be dispersed inside graphite particles. For example, Li silicate particles may be covered with a carbon material (such as amorphous carbon). The Si-C composite material and graphite may be mixed together for use.

<Multi-Component System>

The negative electrode active material may include two or more components. The negative electrode active material may include the carbon-based active material (such as graphite) and the alloy-based active material (such as Si, SiO). The mixing ratio (mass ratio) of the carbon-based active material and the alloy-based active material may be "(carbon-based active material)/(alloy-based active material)=1/9 to 9/1", or "(carbon-based active material)/(alloy-based active material)=2/8 to 8/2", or "(carbon-based active material)/(alloy-based active material)=3/7 to 7/3", or "(carbon-based active material)/(alloy-based active material)=4/6 to 6/4", for example.

<Large Particles/Small Particles>

The negative electrode active material may have a unimodal particle size distribution (based on the number), for example. The negative electrode active material may have a multimodal particle size distribution, for example. The negative electrode active material may have a bimodal particle size distribution, for example. That is, the negative electrode active material may include large particles and small particles. When the particle size distribution is bimodal, the particle size corresponding to the peak top of the larger particle size is regarded as the particle size of the large particles ($d_L$). The particle size corresponding to the peak top of the smaller particle size is regarded as the particle size of the small particles (ds). The particle size ratio ($d_L/d_S$) may be from 2 to 10, or from 2 to 5, or from 2 to 4, for example. $d_L$ may be from 8 to 20 $\mu$m, or from 8 to 15 $\mu$m, for example. ds may be from 1 to 10 $\mu$m, or from 1 to 5 $\mu$m, for example.

For example, with the use of a waveform analysis software, peak separating processing may be carried out for the particle size distribution. The ratio between the peak area of the large particles ($S_L$) and the peak area of the small particles (Ss) may be "$S_L/S_S$=1/9 to 9/1", or "$S_L/S_S$=5/5 to 9/1", or "$S_L/S_S$=7/3 to 9/1", for example.

The number-based particle size distribution is measured by a microscope method. From the electrode active material layer, a plurality of cross-sectional samples are taken. The cross-sectional sample may include a cross section vertical to the surface of the electrode active material layer, for example. By ion milling and/or the like, for example, cleaning is carried out to the side that is to be observed. By SEM, the cross-sectional sample is examined. The magnification for the examination is adjusted in such a way that 10 to 100 particles are contained within the examination field of view. The Feret diameters of all the particles in the image are measured. "Feret diameter" refers to the distance between two points located farthest apart from each other on the outline of the particle. The plurality of the cross-sectional samples are examined to obtain a total of 1000 or more Feret diameters. From the 1000 or more Feret diameters, number-based particle size distribution is created.

The bimodal particle size distribution may be formed by two types of particles mixed together. These two types of particles have different particle size distributions. For example, the two types of particles may have different D50. "D50" refers to a particle size in volume-based particle size distribution at which the cumulative frequency accumulated from the side of small particle sizes reaches 50%. D50 may be measured by laser diffraction. The sample to be measured is powder. For example, the large particles may have a D50 from 8 to 20 $\mu$m, or from 8 to 15 $\mu$m.

For example, the small particles may have a D50 from 1 to 10 $\mu$m, or from 1 to 5 $\mu$m. The ratio of the D50 of the large particles to the D50 of the small particles may be from 2 to 10, or from 2 to 5, or from 2 to 4, for example. The mixing ratio (mass ratio) between the large particles and the small particles may be "(large particles)/(small particles)=1/9 to 9/1", or "(large particles)/(small particles)=5/5 to 9/1", or "(large particles)/(small particles)=7/3 to 9/1", for example.

The large particles and the small particles may have the same composition, or may have different compositions. For example, the large particles may be NCA and the small particles may be NCM. For example, the large particles may be NCM ($0.6{\leq}x$) and the small particles may be NCM ($x<0.6$).

<Separator>

Separator 30 is capable of separating positive electrode 10 from negative electrode 20. Separator 30 is electrically insulating. Separator 30 may include, for example, at least one selected from the group consisting of a resin film, an inorganic particle layer, and an organic particle layer. Separator 30 may include a resin film and an inorganic particle layer, for example.

<<Resin Film>>

The resin film is porous. The resin film may include a microporous film, a nonwoven fabric, and/or the like, for example. The resin film includes a resin skeleton. The resin skeleton may be contiguous in mesh form, for example. Gaps in the resin skeleton form pores. The resin film allows the electrolyte to permeate therethrough. The resin film may have an average pore size of 1 $\mu$m or less, for example. The resin film may have an average pore size from 0.01 to 1 $\mu$m, or from 0.1 to 0.5 $\mu$m, for example. The "average pore size" may be measured by mercury porosimetry. The resin film may have a Gurley value from 50 to 250 s/100cm$^3$, for example. "Gurley value" may be measured by a Gurley test method.

The resin film may include, for example, at least one selected from the group consisting of an olefin-based resin, a polyurethane-based resin, a polyamide-based resin, a cellulose-based resin, a polyether-based resin, an acrylic-based resin, a polyester-based resin, and the like. The resin film may include, for example, at least one selected from the group consisting of polyethylene (PE), polypropylene (PP), polyamide (PA), polyamide-imide (PAI), polyimide (PI), aromatic polyamide (aramid), and polyphenylene ether (PPE), and derivatives of these. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may consist of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

<<Inorganic Particle Layer>>

The inorganic particle layer may be formed on the surface of the resin film. The inorganic particle layer may be formed on only one side of the resin film, or may be formed on both sides of the resin film. The inorganic particle layer may be formed on the side facing positive electrode 10, or may be formed on the side facing negative electrode 20. The inorganic particle layer may be formed on the surface of positive electrode 10, or may be formed on the surface of negative electrode 20.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may be in any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include, for example, at least one selected from the group consisting of an acrylic-based resin, a polyamide-based resin, a fluorine-based resin, an aromatic-polyether-based resin, and a liquid-crystal-polyester-based resin, and the like.

## <<Organic Particle Layer>>

Separator 30 may include an organic particle layer, for example. Separator 30 may include an organic particle layer instead of the resin film, for example. Separator 30 may include an organic particle layer instead of the inorganic particle layer, for example. Separator 30 may include both the resin film and an organic particle layer. Separator 30 may include both the inorganic particle layer and an organic particle layer. Separator 30 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include, for example, at least one selected from the group consisting of PE, PP, PTFE, PI, PAI, PA, aramid, and the like. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 30 may include a mixed layer, for example. The mixed layer includes both inorganic particles and organic particles.

## <Electrolyte>

The electrolyte dissolves Li ions in it. The electrolyte may be a liquid electrolyte, or may be a gelled electrolyte. The liquid electrolyte may include an electrolyte solution, for example. The electrolyte solution includes a solvent and a solute.

## <<Solvent>>

## <Ether-Based Solvent>

The electrolyte solution may include an ether-based solvent and/or the like, for example. The solvent may include hydrofluoroether (HFE) and/or the like, for example. HFE may include, for example, at least one selected from the group consisting of a difluoromethyl group, a 2,2-difluoroethyl group, a 2,2,2-trifluoroethyl group, a 1,1,2,2-tetrafluoroethyl group, a 2,2,3,3,3-pentafluoropropyl group, a 2,2,3,3-tetrafluoropropyl group, a 1,1,1,3,3,3-hexafluoroisopropyl group, a 1,1,2,3,3,3-hexafluoropropyl group, a 2,2,3,3,4,4,4-heptafluorobutyl group, a 2,2,3,3,4,4-hexafluorobutyl group, and a 2,2,3,3,4,4,5,5-octafluoropentyl group.

The solvent may also include an ether other than HFE (the ether may also be called "a second ether" hereinafter). The second ether may include, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), ethylglyme, triglyme, tetraglyme, and derivatives of these. For example, the solvent may include the second ether (such as DME) in a volume fraction from 1 to 50%, with the remainder being made up of HFE. For example, the solvent may include the second ether in a volume fraction from 10 to 40%, with the remainder being made up of HFE.

## <Carbonate-Based Solvent>

The electrolyte solution may include a carbonate-based solvent (a carbonate-ester-based solvent), for example. The solvent may include a cyclic carbonate, a chain carbonate, a fluorinated carbonate, and/or the like, for example. The solvent may include, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation (C-1), for example.

$$V_{EC}+V_{FEC}+V_{EMC}+V_{DMC}+V_{DEC}=10 \qquad (C\text{-}1)$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The following relationships are satisfied: $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$.

In the above formula (C-1),

the relationship of $1 \leq V_{EC} \leq 2$ or $2 \leq V_{EC} \leq 3$ may be satisfied, for example.

The relationship of $1 \leq V_{FEC} \leq 2$ or $2 \leq V_{FEC} \leq 4$ may be satisfied, for example.

The relationship of $3 \leq V_{EMC} \leq 4$ or $6 \leq V_{EMC} \leq 8$ may be satisfied, for example.

The relationship of $3 \leq V_{DMC} \leq 4$ or $6 \leq V_{DMC} \leq 8$ may be satisfied, for example.

The relationship of $3 \leq V_{DEC} \leq 4$ or $6 \leq V_{DEC} \leq 8$ may be satisfied, for example.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

<Additive>

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include, for example, at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these.

The components described above as the solute and the solvent may be used as a trace component (an additive). The additive may include, for example, at least one selected from the group consisting of LiBF$_4$, LiFSI, LiTFSI, LiBOB, LiDFOB, LiDFOP, LiPO$_2$F$_2$, FSO$_3$Li, LiI, LiBr, HFE, DOX, PC, FEC, and derivatives of these.

<<Ionic Liquid>>

The liquid electrolyte may include an ionic liquid. The liquid electrolyte may include, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these.

«Gelled Electrolyte»

The gelled electrolyte may include a liquid electrolyte and a polymer material. The polymer material may form a polymer matrix. The polymer material may include, for example, at least one selected from the group consisting of PVdF, PVdF-HFP, PAN, PVdF-PAN, polyethylene oxide (PEO), polyethylene glycol (PEG), and derivatives of these.

<Battery Configuration>

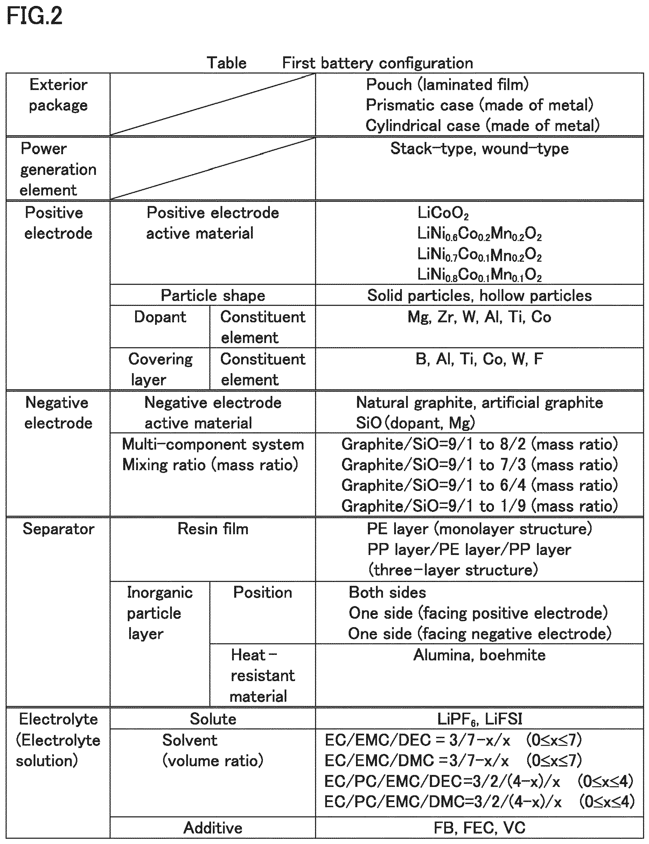

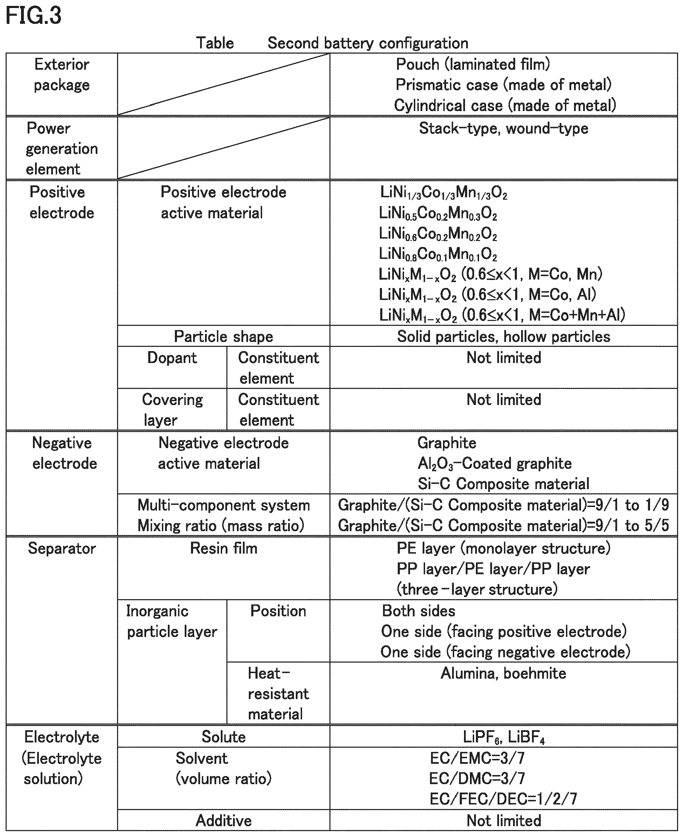

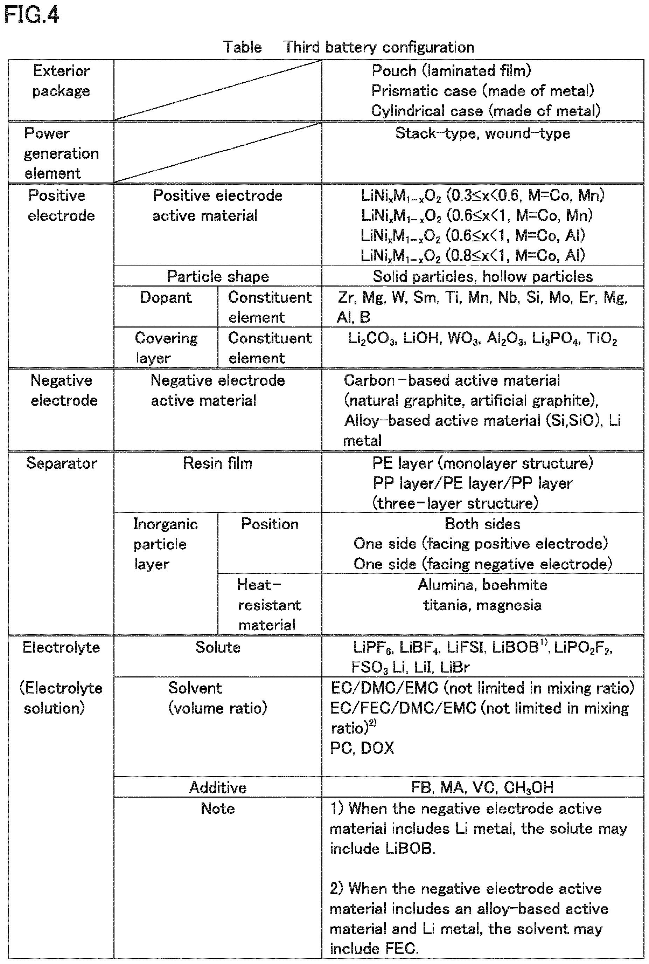

Fig. 2 is a table showing a first battery configuration. Fig. 3 is a table showing a second battery configuration. Fig. 4 is a table showing a third battery configuration. In each table, when a plurality of materials are described in a single cell, this description is intended to mean one of them as well as a combination of them. For example, when materials "$\alpha$, $\beta$, $\gamma$" are described in a single cell, this description is intended to mean "at least one selected from the group consisting of $\alpha$, $\beta$, and $\gamma$". Certain elements may be extracted from the first to third battery configurations and optionally combined together.

The present embodiment may be incorporated into the first to third battery configurations, for example. The positive electrode in the first battery configuration may be replaced by the positive electrode (positive electrode current collector 11, positive electrode active material layer 12) according to the present embodiment. For example, combining the first to third battery configurations with the present embodiment may improve battery performance.

<<Method of Producing Non-Aqueous Electrolyte Secondary Battery>>

The method of producing the non-aqueous electrolyte secondary battery according to the present embodiment includes "(A) preparing a positive electrode", "(B) preparing a negative electrode", and "(C) assembly and heat press".

<(A) Preparing Positive Electrode>

The present production method includes preparing positive electrode 10 that includes the positive electrode active material. For example, a slurry including the positive electrode active material may be applied to the surface of positive electrode current collector 11 to form positive electrode active material layer 12. In the present production method, the positive electrode active material has a layered structure and is in the form of secondary particles. The secondary particles have an average particle size of 8.0 $\mu$m or more, and the ratio of the DBP oil absorption number of the secondary particles to the BET specific surface area of the secondary particles is 0.3 or more.

<(B) Preparing Negative Electrode>

The present production method includes preparing negative electrode 20 that includes the negative electrode active material. For example, a slurry including the negative electrode active material may be applied to the surface of negative electrode current collector 21 to form negative electrode active material layer 22.

<<(C) Assembly and Heat Press>>

The present production method includes assembling a non-aqueous electrolyte secondary battery that includes positive electrode 10, negative electrode 20, separator 30, and a non-aqueous electrolyte solution. For example, power generation element 50 that includes positive electrode 10, separator 30, and negative electrode 20 may be formed.
Power generation element 50 is placed inside the exterior package. Into the exterior package, the electrolyte solution is injected, and the resultant is hermetically sealed.
After hermetically sealed, the exterior package is heat-pressed. The heat-press temperature is preferably from 60°C to 80°C. With the heat-press carried out at a temperature from 60°C to 80°C, adhesion between the electrode and the separator is enhanced.
The heat-press pressure is not particularly limited, and may be from 0.5 MPa to 5 MPa, for example. The heat-press duration is not particularly limited, and may be from 1 minute to 10 minutes, for example.

[Examples]

In the following, the present embodiment will be described using Examples, but the present embodiment is not limited to these Examples.

<Production of Non-Aqueous Electrolyte Secondary Battery>

(Example 1)

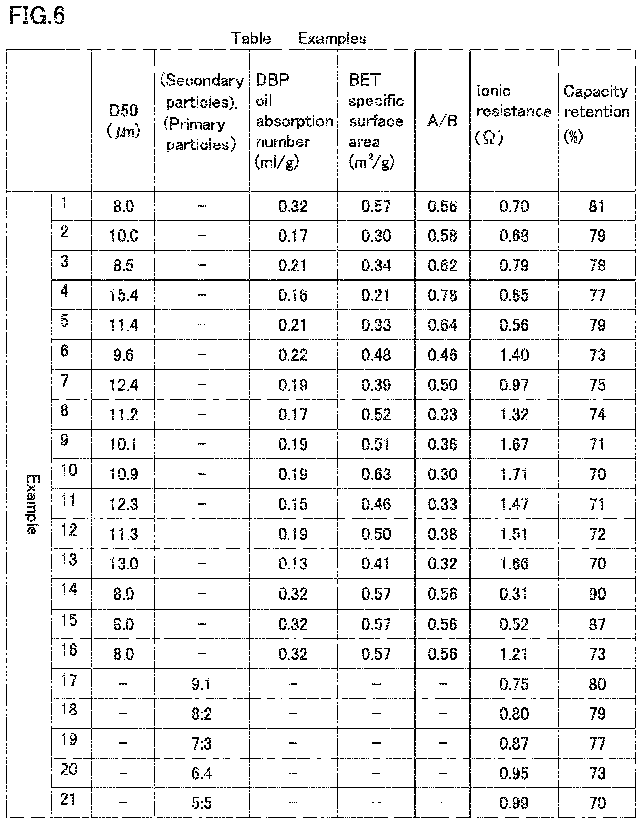

$LiNi_{1/3}Co_{1/3}Mn_{1/3}O_2$ (secondary particles) (96 mass%) as a positive electrode active material, AB (2.5 mass%) as a conductive material, PVdF (1.5 mass%) as a binder, and NMP as a dispersion medium were mixed and dispersed to form a slurry. The resulting slurry was uniformly applied to an Al foil (thickness, 30 μm), which was a positive electrode current collector, with a doctor blade, and dried at 100°C for 30 minutes to prepare a positive electrode. The resulting positive electrode active material layer had a thickness of 120 μm. The D50, the DBP oil absorption number, and the BET specific surface area of the positive electrode active material were as specified in Fig. 6, and the numerical values were measured by the above-described methods. Also in each Example and each Comparative Example described below, the D50, the DBP oil absorption number, and the BET specific surface area of the positive electrode active material were measured by the same methods.

Artificial graphite (average particle size, 22 μm) (96 mass%) as a negative electrode active material, SBR (3 mass%) and CMC (1 mass%) as binders, and water as a dispersion medium were mixed and dispersed to form a slurry. The resulting slurry was uniformly applied to a Cu foil (thickness, 15 μm), which was a negative electrode current collector, with a doctor blade, and dried at 100°C for 30 minutes to prepare a negative electrode.

As a separator, a resin film (thickness, 24 μm) was prepared. The resin film had a three-layer structure ((PP layer)/(PE layer)/(PP layer)). The positive electrode, the separator, and the negative electrode were stacked to form a power generation element.

As an exterior package, a pouch made of an Al-laminated film was prepared. Into the exterior package, the power generation element was placed. An electrolyte was prepared by mixing 1.1 mol/L $LiPF_6$ as a supporting salt, a mixed solvent of EC/DMC/EMC=30/40/30 (volume ratio) as a non-aqueous solvent, and VC as an additive in an amount of 1.0 mass% relative to the total mass of the mixed solvent. The electrolyte was injected into the exterior package. After the electrolyte was injected, the exterior package was sealed. In this manner, a non-aqueous electrolyte secondary battery (a test battery) of Example 1 was produced.

(Comparative Example 1)

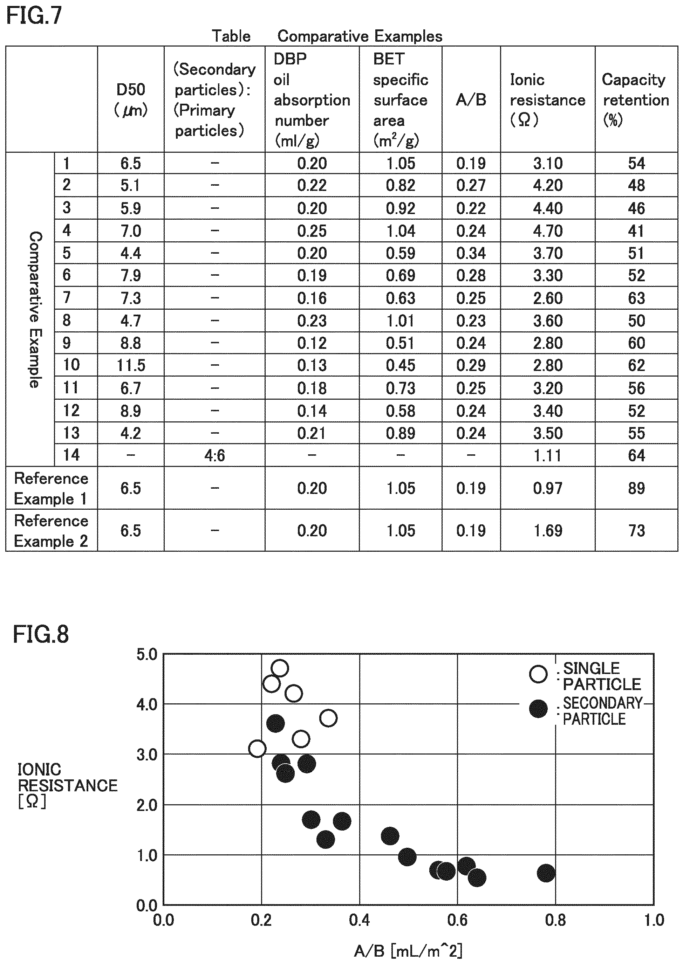

A test battery was produced in the same manner as in Example 1 except that $LiNi_{1/3}Co_{1/3}Mn_{1/3}O_2$ (primary particles) was used as a positive electrode active material and the D50, the DBP oil absorption number, and the BET specific surface area of the positive electrode active material were as specified in Fig. 7.

(Example 2 to Example 10, Comparative Examples 2 to 10)

Each test battery was produced in the same manner as in Example 1 except that a positive electrode active material having the D50, the DBP oil absorption number, and the BET specific surface area as specified in Fig. 6 and Fig. 7 was used.

(Example 11 to Example 13, Comparative Examples 11 to 13)

Each test battery was produced in the same manner as in Example 1 except that, as a positive electrode active material, $LiNi_{0.7}Co_{0.1}Mn_{0.2}O_2$ was used in Example 11 and Comparative Example 11, $LiNi_{0.8}Co_{0.1}Mn_{0.1}$ was used in Example 12 and Comparative Example 12, and $LiNi_{0.9}Co_{0.05}Mn_{0.05}$ was used in Example 13 and Comparative Example 13, and also the D50, the DBP oil absorption number, and the BET specific surface area of the positive electrode active material were as specified in Fig. 6 and Fig. 7.

(Examples 14 to 16)

Each test battery was produced in the same manner as in Example 1 except that the thickness of the positive electrode active material layer of Example 1 was changed to 45 μm, 80 μm, and 185 μm, respectively.

(Examples 17 to 21, Comparative Example 14)

Each test battery was produced in the same manner as in Example 1 except that the positive electrode active materials used in Example 1 and Comparative Example 1 were mixed in the proportion as specified in Fig. 6 and Fig. 7 to be used as the positive electrode active material.

(Reference Examples 1 to 2)

Each test battery was produced in the same manner as in Example 1 except that the thickness of the positive electrode active material layer of Comparative Example 1 was changed to 45 μm and 80 μm, respectively.

<Evaluation>

(Ionic Resistance)

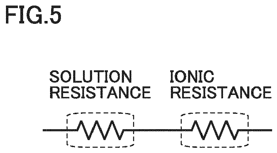

Ionic resistance of the test battery was determined by an alternating-current impedance method. Specifically, 12 hours after production, the test battery was placed in an environment at a temperature of 25°C, and the alternating-current impedance was measured at a frequency within the range of 10 mHZ to 100000 Hz. The arc obtained by the measurement was subjected to equivalent circuit fitting, and from the fitting results, ionic resistance was determined. The results are shown in Figs. 6 and 7. Here, Fig. 5 illustrates an equivalent circuit model of non-aqueous electrolyte secondary batteries according to Examples and Comparative Examples of the present embodiment. Referring to Fig. 5, the equivalent circuit model includes solution resistance and ionic resistance as circuit constants.

(Capacity Retention)

<<Activation>>

In an environment at a temperature of 25°C, the test battery was charged and discharged in a constant current-constant voltage (CC-CV) mode. The conditions are as described below. "C" is a symbol denoting the hour rate of electric current. With a current of 1 C, the design capacity of the test battery is discharged in 1 hour.

[Conditions]

CC Charging: charge current=0.1 C, cutoff voltage=4.25 V
CV Charging: 3 hours
CC Discharging: discharge current=0.1 C, cutoff voltage=2.5 V

«Cycle Testing»

In an environment at a temperature of 40°C, the test battery was subjected to 150 charge-discharge cycles in a CC mode. A single cycle refers to a single sequence of "Charging→Rest→Discharging" as specified below. The discharged capacity at the 150th cycle was divided by the discharged capacity at the 1st cycle, and thereby capacity retention was determined. The capacity retention is shown in Fig. 6 and Fig. 7. The higher the capacity retention is, the better the cycle endurance is considered to be.

[Conditions]

Charging: charge current=0.5 C, cutoff voltage=4.25 V
Rest: 60 seconds
Discharging: discharge current=0.5 C, cutoff voltage=3.0 V

<Results>

(Ionic Resistance)

Fig. 8 is a graph showing the relationship between the A/B (A'/B') and the ionic resistance of the test battery according to Examples 1 to 10 and Comparative Examples 1 to 10. It was observed that when A/B was 0.3 or more, an increase of ionic resistance was inhibited; especially when A/B was 0.5 or more, an increase of ionic resistance was markedly inhibited.

In Examples 11 to 13 where the positive electrode active material was changed, inhibition of an increase in ionic resistance was observed. In Examples 14 to 16 where the thickness of the positive electrode active material layer was changed, inhibition of an increase in ionic resistance was also observed. In Examples 17 to 21 where primary particles and secondary particles were included and the content rate of the secondary particles in the positive electrode active material was 50% or more, inhibition of an increase in ionic resistance was also observed.

On the other hand, capacity retention in Comparative Examples was inferior to those in Examples.

Test batteries in Reference Examples 1 to 2 and Comparative Example 1 include the same primary particles as a positive electrode active material, with the thickness of the positive electrode active material layer being different from one another. The results in Fig. 8 indicate that an increase of ionic resistance was inhibited in Reference Examples 1 and 2 where the positive electrode active material layer was relatively thin, while an increase of ionic resistance was not inhibited in Comparative Example 1 where the thickness was similar to that of Examples.

(Capacity Retention)

Capacity retention in Examples was 70% or more, indicating that the capacity retention after cycle testing was good.

On the other hand, capacity retention in Comparative Examples was inferior to those in Examples.

Similarly to the above results, capacity retention was good in Reference Examples 1 and 2 where the positive electrode active material layer was relatively thin, while capacity retention was degraded in Comparative Example 1 where the thickness was similar to that of Examples.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

**Claims**

1. A non-aqueous electrolyte secondary battery (100) comprising:

    a positive electrode (10);
    a negative electrode (20); and
    a separator (30), wherein
    the positive electrode (10) includes a positive electrode active material layer (12),
    the positive electrode active material layer (12) includes a positive electrode active material having a layered structure,
    the positive electrode active material includes secondary particles,
    the secondary particles have an average particle size of 8.0 $\mu$m or more, and
    a ratio of a DBP oil absorption number of the secondary particles to a BET specific surface area of the secondary particles is 0.3 or more.

2. The non-aqueous electrolyte secondary battery (100) according to claim 1, wherein the positive electrode active material layer (12) has a thickness of 80 $\mu$m or more.

3. The non-aqueous electrolyte secondary battery (100) according to claim 1 or 2, wherein

    the positive electrode active material includes primary particles, and
    a content rate of the secondary particles in the positive electrode active material is 50 mass% or more.

4. The non-aqueous electrolyte secondary battery (100) according to any one of claims 1 to 3, wherein the ratio of a DBP oil absorption number of the secondary particles to a BET specific surface area of the secondary particles is 0.5 or more.

FIG.1

# FIG.2

Table   First battery configuration

| Exterior package | | | Pouch (laminated film) Prismatic case (made of metal) Cylindrical case (made of metal) |
|---|---|---|---|
| Power generation element | | | Stack-type, wound-type |
| Positive electrode | Positive electrode active material | | $LiCoO_2$ $LiNi_{0.6}Co_{0.2}Mn_{0.2}O_2$ $LiNi_{0.7}Co_{0.1}Mn_{0.2}O_2$ $LiNi_{0.8}Co_{0.1}Mn_{0.1}O_2$ |
| | Particle shape | | Solid particles, hollow particles |
| | Dopant | Constituent element | Mg, Zr, W, Al, Ti, Co |
| | Covering layer | Constituent element | B, Al, Ti, Co, W, F |
| Negative electrode | Negative electrode active material | | Natural graphite, artificial graphite SiO (dopant, Mg) |
| | Multi-component system Mixing ratio (mass ratio) | | Graphite/SiO=9/1 to 8/2 (mass ratio) Graphite/SiO=9/1 to 7/3 (mass ratio) Graphite/SiO=9/1 to 6/4 (mass ratio) Graphite/SiO=9/1 to 1/9 (mass ratio) |
| Separator | Resin film | | PE layer (monolayer structure) PP layer/PE layer/PP layer (three-layer structure) |
| | Inorganic particle layer | Position | Both sides One side (facing positive electrode) One side (facing negative electrode) |
| | | Heat-resistant material | Alumina, boehmite |
| Electrolyte (Electrolyte solution) | Solute | | $LiPF_6$, LiFSI |
| | Solvent (volume ratio) | | EC/EMC/DEC = 3/7−x/x  ($0 \leq x \leq 7$) EC/EMC/DMC =3/7−x/x  ($0 \leq x \leq 7$) EC/PC/EMC/DEC=3/2/(4−x)/x  ($0 \leq x \leq 4$) EC/PC/EMC/DMC=3/2/(4−x)/x  ($0 \leq x \leq 4$) |
| | Additive | | FB, FEC, VC |

# FIG.3

Table    Second battery configuration

| Exterior package | | | Pouch (laminated film)<br>Prismatic case (made of metal)<br>Cylindrical case (made of metal) |
|---|---|---|---|
| Power generation element | | | Stack-type, wound-type |
| Positive electrode | Positive electrode active material | | $LiNi_{1/3}Co_{1/3}Mn_{1/3}O_2$<br>$LiNi_{0.5}Co_{0.2}Mn_{0.3}O_2$<br>$LiNi_{0.6}Co_{0.2}Mn_{0.2}O_2$<br>$LiNi_{0.8}Co_{0.1}Mn_{0.1}O_2$<br>$LiNi_xM_{1-x}O_2$ ($0.6{\leq}x{<}1$, M=Co, Mn)<br>$LiNi_xM_{1-x}O_2$ ($0.6{\leq}x{<}1$, M=Co, Al)<br>$LiNi_xM_{1-x}O_2$ ($0.6{\leq}x{<}1$, M=Co+Mn+Al) |
| | Particle shape | | Solid particles, hollow particles |
| | Dopant | Constituent element | Not limited |
| | Covering layer | Constituent element | Not limited |
| Negative electrode | Negative electrode active material | | Graphite<br>$Al_2O_3$-Coated graphite<br>Si-C Composite material |
| | Multi-component system Mixing ratio (mass ratio) | | Graphite/(Si-C Composite material)=9/1 to 1/9<br>Graphite/(Si-C Composite material)=9/1 to 5/5 |
| Separator | Resin film | | PE layer (monolayer structure)<br>PP layer/PE layer/PP layer<br>(three-layer structure) |
| | Inorganic particle layer | Position | Both sides<br>One side (facing positive electrode)<br>One side (facing negative electrode) |
| | | Heat-resistant material | Alumina, boehmite |
| Electrolyte (Electrolyte solution) | Solute | | $LiPF_6$, $LiBF_4$ |
| | Solvent (volume ratio) | | EC/EMC=3/7<br>EC/DMC=3/7<br>EC/FEC/DEC=1/2/7 |
| | Additive | | Not limited |

# FIG.4

Table    Third battery configuration

| Exterior package | | | Pouch (laminated film) Prismatic case (made of metal) Cylindrical case (made of metal) |
|---|---|---|---|
| Power generation element | | | Stack-type, wound-type |
| Positive electrode | Positive electrode active material | | $LiNi_xM_{1-x}O_2$ (0.3≤x<0.6, M=Co, Mn) $LiNi_xM_{1-x}O_2$ (0.6≤x<1, M=Co, Mn) $LiNi_xM_{1-x}O_2$ (0.6≤x<1, M=Co, Al) $LiNi_xM_{1-x}O_2$ (0.8≤x<1, M=Co, Al) |
| | Particle shape | | Solid particles, hollow particles |
| | Dopant | Constituent element | Zr, Mg, W, Sm, Ti, Mn, Nb, Si, Mo, Er, Mg, Al, B |
| | Covering layer | Constituent element | $Li_2CO_3$, LiOH, $WO_3$, $Al_2O_3$, $Li_3PO_4$, $TiO_2$ |
| Negative electrode | Negative electrode active material | | Carbon-based active material (natural graphite, artificial graphite), Alloy-based active material (Si,SiO), Li metal |
| Separator | Resin film | | PE layer (monolayer structure) PP layer/PE layer/PP layer (three-layer structure) |
| | Inorganic particle layer | Position | Both sides One side (facing positive electrode) One side (facing negative electrode) |
| | | Heat-resistant material | Alumina, boehmite titania, magnesia |
| Electrolyte (Electrolyte solution) | Solute | | $LiPF_6$, $LiBF_4$, LiFSI, LiBOB[1], $LiPO_2F_2$, $FSO_3$ Li, LiI, LiBr |
| | Solvent (volume ratio) | | EC/DMC/EMC (not limited in mixing ratio) EC/FEC/DMC/EMC (not limited in mixing ratio)[2] PC, DOX |
| | Additive | | FB, MA, VC, $CH_3OH$ |
| | Note | | 1) When the negative electrode active material includes Li metal, the solute may include LiBOB. 2) When the negative electrode active material includes an alloy-based active material and Li metal, the solvent may include FEC. |

FIG.5

## FIG.6

Table   Examples

| | | D50 ($\mu$m) | (Secondary particles): (Primary particles) | DBP oil absorption number (ml/g) | BET specific surface area (m$^2$/g) | A/B | Ionic resistance ($\Omega$) | Capacity retention (%) |
|---|---|---|---|---|---|---|---|---|
| Example | 1 | 8.0 | – | 0.32 | 0.57 | 0.56 | 0.70 | 81 |
| | 2 | 10.0 | – | 0.17 | 0.30 | 0.58 | 0.68 | 79 |
| | 3 | 8.5 | – | 0.21 | 0.34 | 0.62 | 0.79 | 78 |
| | 4 | 15.4 | – | 0.16 | 0.21 | 0.78 | 0.65 | 77 |
| | 5 | 11.4 | – | 0.21 | 0.33 | 0.64 | 0.56 | 79 |
| | 6 | 9.6 | – | 0.22 | 0.48 | 0.46 | 1.40 | 73 |
| | 7 | 12.4 | – | 0.19 | 0.39 | 0.50 | 0.97 | 75 |
| | 8 | 11.2 | – | 0.17 | 0.52 | 0.33 | 1.32 | 74 |
| | 9 | 10.1 | – | 0.19 | 0.51 | 0.36 | 1.67 | 71 |
| | 10 | 10.9 | – | 0.19 | 0.63 | 0.30 | 1.71 | 70 |
| | 11 | 12.3 | – | 0.15 | 0.46 | 0.33 | 1.47 | 71 |
| | 12 | 11.3 | – | 0.19 | 0.50 | 0.38 | 1.51 | 72 |
| | 13 | 13.0 | – | 0.13 | 0.41 | 0.32 | 1.66 | 70 |
| | 14 | 8.0 | – | 0.32 | 0.57 | 0.56 | 0.31 | 90 |
| | 15 | 8.0 | – | 0.32 | 0.57 | 0.56 | 0.52 | 87 |
| | 16 | 8.0 | – | 0.32 | 0.57 | 0.56 | 1.21 | 73 |
| | 17 | – | 9:1 | – | – | – | 0.75 | 80 |
| | 18 | – | 8:2 | – | – | – | 0.80 | 79 |
| | 19 | – | 7:3 | – | – | – | 0.87 | 77 |
| | 20 | – | 6.4 | – | – | – | 0.95 | 73 |
| | 21 | – | 5:5 | – | – | – | 0.99 | 70 |

FIG.7

Table    Comparative Examples

| | | D50 (μm) | (Secondary particles): (Primary particles) | DBP oil absorption number (ml/g) | BET specific surface area (m²/g) | A/B | Ionic resistance (Ω) | Capacity retention (%) |
|---|---|---|---|---|---|---|---|---|
| Comparative Example | 1 | 6.5 | – | 0.20 | 1.05 | 0.19 | 3.10 | 54 |
| | 2 | 5.1 | – | 0.22 | 0.82 | 0.27 | 4.20 | 48 |
| | 3 | 5.9 | – | 0.20 | 0.92 | 0.22 | 4.40 | 46 |
| | 4 | 7.0 | – | 0.25 | 1.04 | 0.24 | 4.70 | 41 |
| | 5 | 4.4 | – | 0.20 | 0.59 | 0.34 | 3.70 | 51 |
| | 6 | 7.9 | – | 0.19 | 0.69 | 0.28 | 3.30 | 52 |
| | 7 | 7.3 | – | 0.16 | 0.63 | 0.25 | 2.60 | 63 |
| | 8 | 4.7 | – | 0.23 | 1.01 | 0.23 | 3.60 | 50 |
| | 9 | 8.8 | – | 0.12 | 0.51 | 0.24 | 2.80 | 60 |
| | 10 | 11.5 | – | 0.13 | 0.45 | 0.29 | 2.80 | 62 |
| | 11 | 6.7 | – | 0.18 | 0.73 | 0.25 | 3.20 | 56 |
| | 12 | 8.9 | – | 0.14 | 0.58 | 0.24 | 3.40 | 52 |
| | 13 | 4.2 | – | 0.21 | 0.89 | 0.24 | 3.50 | 55 |
| | 14 | – | 4:6 | – | – | – | 1.11 | 64 |
| Reference Example 1 | | 6.5 | – | 0.20 | 1.05 | 0.19 | 0.97 | 89 |
| Reference Example 2 | | 6.5 | – | 0.20 | 1.05 | 0.19 | 1.69 | 73 |

FIG.8

Europäisches
Patentamt

European
Patent Office

Office européen
des brevets

# EUROPEAN SEARCH REPORT

Application Number

EP 24 15 3506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/014449 A1 (HITACHI METALS LTD [JP]) 20 January 2022 (2022-01-20) * abstract * | 1-4 | INV. H01M4/131 H01M4/505 H01M4/525 H01M10/0525 H01M4/02 |
| X,P | & US 2023/282819 A1 (TOKORO HISATO [JP] ET AL) 7 September 2023 (2023-09-07) * paragraph [0085]; claims 1, 2 * | 1,2,4 | |
| A | US 2022/367859 A1 (HAYASHI TETSUTARO [JP] ET AL) 17 November 2022 (2022-11-17) * claim 1 * | 1-4 | |
| A | US 2019/305363 A1 (NOZOE TSUTOMU [JP] ET AL) 3 October 2019 (2019-10-03) * table 1 * | 1-4 | |
| A | US 2011/065002 A1 (NAGASE RYUICHI [JP]) 17 March 2011 (2011-03-17) * claims 1, 2 * | 1-4 | |

TECHNICAL FIELDS
SEARCHED (IPC)

H01M

The present search report has been drawn up for all claims

| Place of search | Date of completion of the search | Examiner |
|---|---|---|
| Munich | 21 June 2024 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 3506

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | Publication date | Patent family member(s) | | Publication date |
|---|---|---|---|---|
| WO 2022014449 A1 | 20-01-2022 | CN | 115836410 A | 21-03-2023 |
| | | EP | 4184614 A1 | 24-05-2023 |
| | | JP | 7068637 B1 | 17-05-2022 |
| | | JP | WO2022014449 A1 | 20-01-2022 |
| | | KR | 20230066309 A | 15-05-2023 |
| | | US | 2023282819 A1 | 07-09-2023 |
| | | WO | 2022014449 A1 | 20-01-2022 |
| US 2022367859 A1 | 17-11-2022 | CN | 114521300 A | 20-05-2022 |
| | | EP | 4032859 A1 | 27-07-2022 |
| | | JP | 2024038150 A | 19-03-2024 |
| | | JP | WO2021054468 A1 | 25-03-2021 |
| | | US | 2022367859 A1 | 17-11-2022 |
| | | WO | 2021054468 A1 | 25-03-2021 |
| US 2019305363 A1 | 03-10-2019 | JP | 6443575 B1 | 26-12-2018 |
| | | JP | 2019175765 A | 10-10-2019 |
| | | US | 2019305363 A1 | 03-10-2019 |
| US 2011065002 A1 | 17-03-2011 | CN | 102067362 A | 18-05-2011 |
| | | EP | 2365565 A1 | 14-09-2011 |
| | | JP | 4584351 B2 | 17-11-2010 |
| | | JP | WO2010064504 A1 | 10-05-2012 |
| | | KR | 20110025809 A | 11-03-2011 |
| | | TW | 201025708 A | 01-07-2010 |
| | | US | 2011065002 A1 | 17-03-2011 |
| | | WO | 2010064504 A1 | 10-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023020478 A

- JP 2014010991 A